(19) Europäisches Patentamt
European Patent Office
Office européen des brevets

(11) Publication number: 0 387 016 A2

(12) # EUROPEAN PATENT APPLICATION

(21) Application number: 90302399.2

(22) Date of filing: 07.03.90

(51) Int. Cl.5: G11B 7/24

(30) Priority: 07.03.89 JP 54653/89
07.03.89 JP 54654/89

(43) Date of publication of application:
12.09.90 Bulletin 90/37

(84) Designated Contracting States:
AT BE CH DE DK ES FR GB GR IT LI LU NL SE

(71) Applicant: MITSUI PETROCHEMICAL INDUSTRIES, LTD.
2-5, Kasumigaseki 3-chome Chiyoda-ku
Tokyo 100(JP)

(72) Inventor: Shigematsu, Shigeto, c/o Mitsui Petrochemical
Industries, Ltd., 3 Chigusa-Kaigan
Ichihara-shi, Chiba(JP)
Inventor: Tsuzukiyama, Koji, c/o Mitsui Petrochemical
Industries, Ltd., 3 Chigusa-Kaigan
Ichihara-shi, Chiba(JP)

(74) Representative: Myerscough, Philip Boyd et al
J.A.Kemp & Co. 14, South Square Gray's Inn
London, WC1R 5EU(GB)

(54) **Optical recording media.**

(57) In accordance with the present invention, there are provided optical recording media having a substrate and thereon a recording layer and designed to record information by varying optical constants of part of the recording layer by means of irradiation of energy beam. The recording layer contains Te, Ge and Cr. or Te, Ge and Zn, wherein the amount of Cr is 1-30 atom% based on the total amount of atoms constituting the recording layer, and the proportion of Te, Ge and Zn atoms contained in the recording layer are represented by the formula $(Te_xGe_{100-x})_{100-y}Zn_y$ wherein x is $20<x\leq90$ and y is $20\leq y\leq70$. In the optical recording media thus provided, the contrast ratio before and after irradiation of recording laser beam is sharply improved and C/N at the time of reproducing the recorded information improves and, at the same time, the crystallizing temperature of the recording layer is increased and accordingly the optical recording media are prolonged in duration of life.

EP 0 387 016 A2

# OPTICAL RECORDING MEDIA

## FIELD OF THE INVENTION

This invention relates to so-called phase change type optical recording media which are designed to record pieces of information in recording layers formed on substrates by changing optical constants of part of said recording layer by irradiation with energy beam such as light or heat.

## BACKGROUND OF THE INVENTION

Recording media known at present as typical of optical recording media are divided into the following three types. The optical recording media of the first type are those of a pit-forming type which make it possible to record and reproduce given pieces of information by means of pits formed and arranged on a recording layer of said media by irradiating said recording layer with energy beam in correspondent to said given pieces of information. The optical recording media of the second type are magnetooptical recording media which make it possible to record and reproduce given pieces of information by changing a direction of magnetization in correspondent to said given pieces of information of a recording layer with an easy axis of magnetization perpendicular to the recording layer. The optical recording media of the third type are those of a phase change type which make it possible to record and reproduce given pieces of information by changing part of the material of a recording layer from a crystalline state to an amorphous state, and vice versa, thereby varying optical constants of one part of the material of said recording layer from those of the other part of the material of said recording layer.

These three types of optical recording media as referred to above, however, have both merits and demerits. For example, no rewriting is possible in the pit-forming type optical recording media. Further, the optical recording media of the type have such drawbacks that a relatively large energy output is necessary for writing pieces of information, it is difficult to control the shape of pits, and noises are apt to occur. In these pit forming type optical recording media, moreover, there are such problems that because parts of a recording layer are transpired by irradiation with energy beam to form the pits thereon, the recording layer cannot be coated with a protective layer and so the recording media cannot be used in the form of a single plate disc type and, at the same time, even when two pieces of recording disc are laminated to each other so that they become practically useful, the recording media to be laminated should unavoidably have an air-sandwich structure and accordingly they are structurally weak and poor in resistance to impact.

The magnetooptical recording media as referred to above have also such drawbacks that they largely fluctuate in quality according to the variation of the composition thereof, and such recording media as uniform in quality are difficult to prepare. Furthermore, the recording media of the type cause such inconveniences that a recorded information-reproducing system is sophisticated and the cost of an apparatus to record and reproduce pieces of information comes to increase.

The phase change type optical recording media suffer no such inconveniences as in the cases of the aforementioned pit-forming type optical recording media and magnetooptical recording media. In comparison with the aforesaid pit-forming type optical recording media, however, conventional phase change type optical recording media have such an inconvenience that the detective signals are low in strength at the time when the recorded information is reproduced. In the phase change type optical recording media, moreover, the amorphous portion thereof is less stable when compared with the crystalline portion and, therefore, the amorphous portion is gradually crystallized, and this constitutes a deciding factor in decreasing C/N (the proportion of the detective signals to the noises at the time of reproducing the recorded information) of the optical recording media.

In this connection, Japanese Patent L-O-P publn. No. 30086/1987 discloses phase change type optical recording media having a recording layer containing Te, Ge and Sn as principal ingredients and selectively containing Cr. The disclosed optical recording media, however, have such drawbacks that because the recording layer contains Sn, the crystallizing temperature of said recording layer becomes low, and the optical recording media somewhat decrease in serviceability. And, a further improvement in C/N is desired.

Japanese Patent L-O-P Publn. No. 63141/1988 also teaches that in the phase change type optical recording media, the recording layer containing Te and Ge as principal ingredients may further contain Zn as a third ingredient. However, even when the recording layer further contains Zn in an amount as defined in the said publication, C/N and serviceability at the time of reading out the recording information are still not sufficient, and further improvements in these points are desired.

## OBJECT OF THE INVENTION

The present invention has been made in the light of such circumstances as mentioned above, and an object of the invention is to provide optical recording media which are high in C/N at the time of reading out the recorded information and also excellent in serviceability.

## SUMMARY OF THE INVENTION

The optical recording media according to the first embodiment of the present invention, which have a substrate and a recording layer formed thereon and which are designed to record given pieces of information by varying optical constants of part of said recording layer by means of irradiation with energy beam, are characterized in that the recording layer comprises Te, Ge and Cr, and the proportion of Cr contained in said recording layer is 1-30 atom% based on the total amount of atoms constituting the recording layer.

The optical constants according to the present invention are represented by the following formula:
optical constants (A) = n-ik
wherein n is the index of refraction, k is an extinction coefficient, and i is an imaginary number.

The optical recording media of the first embodiment of the invention have the recording layer containing Ge and Cr in addition to Te as defined above, therefore, the contrast ratio (a difference in reflectance when reproducing energy beam is irradiated on the recording layer) before and after irradiation with recording energy beam is sharply improved, with the result that C/N at the time of reproducing the recorded information improves. According to the embodiment of the invention as illustrated above, the crystallizing temperature of the recording layer increases and accordingly the recording medium itself improves in serviceability.

The optical recording media according to the second embodiment of the invention, which have a substrate and a recording layer formed thereon and which are designed to record given pieces of information by varying optical constants of part of said recording layer by means of irradiation with energy beam, are characterized in that the recording layer comprises Te, Ge and Zn, and the proportions of Te, Ge and Zn atoms contained in the recording layer are defined by the following formula $(Te_xGe_{100-x})_{100-y}Zn_y$ wherein x is $20 \leqq x \leqq 90$ and y is $20 < y \leqq 70$.

The optical recording media according to the second embodiment of the invention have the recording layer containing Ge and Zn in addition to Te in the specific proportions as defined above, therefore, the contrast ratio before and after irradiation with the recording energy beam is sharply improved, with the result that C/N at the time of reproducing the recorded information improves. According to the embodiment of the invention as illustrated above, the crystallizing temperature of the recording layer also increases and accordingly the recording medium itself improves in serviceability.

## DETAILED DESCRIPTION OF THE INVENTION

The present invention is illustrated below in detail with reference to embodiments of the invention as shown in the accompanying drawings.

Fig. 1 is a cross-sectional view of the optical recording medium according to one embodiment of the present invention.

Fig. 2 is a graph showing a preferred range of composition of the recording layer according to the first embodiment of the invention.

Figs. 3,4 and 5 are graphs showing variations in reflectance of the first embodiments of the invention.

Figs.6 is a graph showing results of differential scanning calorimeter of the first embodiment of the invention.

Figs.7 is a graph showing variations in reflectance of the comparative example.

Figs.8 is a graph showing results of differential scanning calorimeter of the comparative example.

Fig. 9 is a graph showing a preferred range of composition of the recording layer according to the second embodiment of the invention.

Fig. 10 is a graph showing variations in reflectance of the second embodiment of the invention.

Fig. 11 is a graph showing results of differential scanning calorimeter of the second embodiment of the invention.

As shown in Fig. 1, an optical recording medium 10 according to one example of the first embodiment of the invention comprises a substrate 3, a recording layer 2 formed on the surface of the substrate 3, and a protective layer 1 formed on the surface of the recording layer 2. Although the protective layer 1 is preferably formed on the surface of the recording layer, the recording medium according to the invention may be prepared without the protective layer 1.

Materials used for constituting the substrate 3

may include inorganic material, for example, glass, aluminum or the like materials, and organic material such as poly(methylmethacrylate), polycarbonate, polymer alloy of polycarbonate and polystyrene, cycloolefin polymers such as those disclosed in U.S. Patent No. 4,614,778, including copolymers of ethylene with 1,4,5,8-dimethano-1,2,3,4,4a,5,8,8a-octahydronaphthalene (tetracyclododecene), copolymers of ethylene with 2-methyl-1,4,5,8-dimethano-1,2,3,4,4a,5,8,8a-octahydronaphthalene (methyltetracyclododecene) and copolymers of ethylene with 2-ethyl-1,4,5,8-dimethano-1,2,3,4,4a,5,8,8a-octahydronaphthalene, poly-4-methyl-1-pentene, epoxy resin, polyether sulfone, polysulfone, polyether imide, and the like materials.

Of these materials as exemplified above, preferred are poly(methylmethacrylate), polycarbonate and cycloolefin polymers disclosed in U.S. Patent No. 4,614,778, and particularly preferred are cycloolefin polymers disclosed in U.S.Patent No. 4,614,778 due to the good adhesion to the recording film and a low double refractive index of the substrate.

The substrate 3 may have any thickness so long as it is sufficient to impart appropriate toughness to the whole of the recording medium 10, for example, preferably 0.5-2.5 mm and especially from about 1 to about 1.5 mm.

The recording layer 2 of the first embodiment of the invention is an alloy film containing at least Te, Ge and Cr, and more particularly this recording layer may be a Te-Ge-Cr alloy film or a Te-Ge-Cr alloy film further containing low melting elements other than Te or other ingredients so long as they do not impair the object of the present invention. Of these alloy films, a preferred alloy film for the recording layer is a film consisting essentially of the Te-Ge-Cr alloy. In the first embodiment of the invention, because the recording layer contains Ge and Cr in addition to Te, the crystallizing temperature of said recording layer becomes higher and accordingly the optical recording medium improves in oxidation resistance and serviceability.

The proportion of Cr contained in the recording layer 2 as illustrated above is 1-30 atom%, preferably 3-20 atom% based on the total amount of atoms contained in said recording layer. In the first embodiment of the invention, there are exhibited such effects that by virtue of the presence in the recording layer of Cr in an amount falling within the range as defined above, the contrast ratio before and after the irradiation with recording energy beam is sharply improved and accordingly C/N at the time of reproducing the recorded information is improved, and further that the crystallizing temperature of the recording layer becomes higher and accordingly the optical recording medium is improved in oxidation resistance and serviceability, thus said recording medium is prolonged in duration of life. The proportions of Te, Ge and Cr contained in the recording layer 2 are preferably those falling within the region indicated by oblique lines in Fig. 2. That is, the composition in terms of the number of Te, Ge and Cr atoms of the recording layer 2 may be represented by the formula $(Te_xGe_{100-x})_{100-y}Cr_y$ wherein x is $30 \leqq x \leqq 90$, preferably $40 \leqq x \leqq 70$ , most preferably $40 \leqq x \leqq 60$, and y is $1 \leqq y \leqq 30$, preferably $3 \leqq y \leqq 20$. By virtue of the composition of the recording layer 2 as defined above, the contrast ratio before and after irradiation with recording energy beam is sharply improved and accordingly C/N at the time of reproducing the recorded information improves.

The content or proportion of elements such as Te, Ge, Cr, etc. contained in the recording film of the first embodiment, or that of elements such as Te, Ge, Zn, etc. contaiined in the recording film of the second embodiment is quantitatively determined by ICP emission spectroscopic analysis.

In the first embodiment of the invention, the recording layer 2 having such composition as mentioned above has a film thickness T of 50-10,000 Å, preferably 50-5,000 Å and especially 100-1,500 Å.

In the first embodiment of the invention, the recording layer as illustrated above, prior to irradiation with energy beam such as laser beam for recording given pieces of information, is in an amorphous state, and only portions of said recording layer which have been irradiated with said laser beam are crystallized by gradual cooling, whereby the pieces of information can be recorded.

The recording layer 2 mentioned above may be formed on the surface of the substrate 3, for example, by the following procedure.

That is, the recording layer 2 is formed on the surface of the substrate 3 by depositing an alloy film containing Te, Ge and Cr on said substrate 3 from an alloy target or composite targets of Te, Ge and Cr arranged in a predetermined proportion by means of known film depositing methods, such as vacuum evaporation, sputtering or electron beam evaporation.

The protective layer 1 shown in Fig. 1 is to protect the recording layer 2 so that no pits are formed on said recording layer 2 when irradiated with recording laser beam. The protective layer 1 may be composed, for example, of high molecular materials such as ultraviolet-curing resins, silicon oxides such as $SiO_2$ and SiO, ZnO, silicon nitrides such as $Si_3N_4$, AlN, TiN, carbides such as SiC and TiC, or metallic materials such as Ti, Ni, Cr or Al, or alloys thereof. The protective layer 2 preferably has a film thickness of 100Å to 100 µm. In this connection, the optical recording medium 10 is not limited to the structure as shown in Fig. 1 and it

nay, if necessary, have additionally a dielectric layer or reflection layer.

The optical recording media according to the second embodiment of the present invention are illustrated below.

The optical recording media according to the second embodiment of the invention are the same as those of the first embodiment of the invention except for the composition of the recording layer 2. Therefore, the optical recording media of the second embodiment are illustrated below only with respect to the recording layer 2.

The recording layer 2 of the second embodiment of the invention is an alloy film containing at least Te, Ge and Zn, and said alloy film may contain additionally low melting elements other than Te or other ingredients in such a range where no hindrances are thrown in the way of accomplishing the object of the invention. A preferred alloy film for the recording layer is a film consisting essentially of Te-Ge-Zn alloy. According to the second embodiment of the invention, because of the presence in the recording layer of Ge and Zn in addition to Te, the crystallizing temperature of said recording layer becomes higher and accordingly the resulting recording layer improves in oxidation resistance and serviceability.

The proportion of Zn contained in the recording layer 2 as illustrated above is 20-70 atom%, preferably 25-60 atom% based on the total amount of atoms contained in the recording layer 2. The proportions of Te, Ge and Zn atoms contained in the recording layer 2 of the second embodiment of the invention are preferably those falling within the region indicated by oblique lines in Fig. 9. That is, the composition in terms of the number of Te, Ge and Zn atoms of the recording layer 2 may be represented by the formula $(Te_xGe_{100-x})_{100-y}Zn_y$ wherein x is $20 \leq x \leq 90$, preferably $30 \leq x \leq 80$, and y is $20 < y \leq 70$, preferably $25 \leq y \leq 60$. By virtue of the composition of the recording layer 2 as defined above, the contrast ratio before and after irradiation with recording laser beam is sharply improved and accordingly C/N at the time of reproducing the recorded information improves.

In the second embodiment of the invention, the recording layer 2 having such composition as mentioned above has a film thickness T of 50-10,000 Å, preferably 50-5,000 Å and especially 100-1,500 Å.

In the second embodiment of the invention, the recording layer as illustrated above, prior to irradiation with laser beam for recording pieces of information, is in an amorphous state, and only portions of said recording layer which have been irradiated with said laser beam are crystallized by gradual cooling, whereby the pieces of information can be recorded.

The recording layer 2 as mentioned above may be formed on the surface of the substrate 3, for example, by the following procedure.

That is, the recording layer 2 is formed on the surface of the substrate 3 by depositing an alloy film containing Te, Ge and Zn on said substrate 3 from an alloy target or composite targets of Te, Ge and Zn arranged in a predetermined proportion by means of known depositing methods, such as vacuum evaporation, sputtering or electron beam evaporation.

The present invention is illustrated below in more detail with reference to examples, but it should be construed that the invention is in no way limited to those examples. In the present invention, the first embodiment, that is, the recording medium having the Te-Ge-Cr recording film is preferable.

Example 1

An optical recording medium 10 as shown in Fig. 1 was prepared by using a glass plate as a substrate 3, an alloy film of Te-Ge-Cr (Te:Ge:Cr = 55:35:10 atom%, film thickness T = 3,500 Å) as a recording layer 2, and an acrylic ultraviolet-curing resin (tradename of SD 17, supplied by Dainippon Ink & Chemicals, Inc.) layer as a protective layer 1, having a film thickness of about 100 µm.

This optical recording medium thus prepared was irradiated with a laser beam having a recording pulse width of 1.50 µs, a recording power of 3.0-19.5 mW (1.1 mW pitch) and a wavelength of 830 nm, and then irradiated with a laser beam having a reading power of 0.4 mW to read out a difference in reflectance ΔR of each of the changed phase parts before and after irradiation with the recording laser beam. Results obtained are as shown in Fig. 3. From the results thus obtained, it was confirmed that a favorable contrast ratio is obtained by irradiation of the laser beam having a recording power of at least 6.3 mW. Further, the optical recording medium 10 obtained was subjected to differential thermal analysis at a heating rate of 10 °C/min to obtain results as shown in Fig. 6. From the results thus obtained, it was confirmed that the crystallizing temperature of this optical recording medium is about 261 °C.

Example 2

Example 1 was repeated except that an alloy film of Te-Ge-Cr (Te:Ge:Cr = 56:38:6 atom%) was used as the recording layer 2 to obtain results as shown in Figs. 4.

Example 3

Example 1 was repeated except that an alloy film of Te-Ge-Cr (Te:Ge:Cr = 51:34:15 atom%) was used as the recording layer 2 to obtain results as shown in Figs. 5.

## Example 4

An alloy film of Te-Ge-Cr (Te:Ge:Cr = 50:40:10 atom%, film thickness T = 1,100 Å) was formed as a recording layer 2 on a substrate composed of an amorphous copolymer of ethylene with 1,4,5,8-dimethano-1,2,3,4,4a,5,8,8a-octahydronaphthalene (structure formula

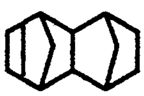 ,

abbreviated to DMON below) by means of sputterring method, said amorphous copolymer having an ethylene content of 59 mol% measured by $^{19}$C-NMR analysis, a DMON content of 41 mol%, an intrisic viscosity [η] of 0.42 dl/g measured in decalin at 135°C and a softening point (TMA) of 154°C. Subsequently, an acrylic ultraviolet-curing resin (tradename of SD 17, supplied by Dainippon Ink & Chemicals, Inc.) was coated on the recording layer by means of spin coat method and the ultraviolet-curing resin was irradiated with ultraviolet beam to obtain a protective layer 1 having film thickness of about 10 µm so that an optical recording medium was obtained.

This optical recording medium thus prepared was setting in an optical disk driving aparatus and was irradiated with a recording laser beam having a beam velocity of 4.7 m/sec, a recording freqency of 1 MHz, and a duty factor of 50%. Subsequently, the recording medium was irradiated with a reading laser beam and a reflection signal of the laser beam was inputted into a spectrum analyzer so as to mesure carrier value (C) and noise value (N) at the reading fregency of 1 MHz. Result of C/N was 52 dB.

## Example 5

Example 4 was repeated except that an alloy film of Te-Ge-Cr (Te:Ge:Cr = 52:36:12 atom%) was used as the recording layer 2 to obtain an optical recording medium.

The recording medium was examined by the same method as example 4. Result of C/N was 51 dB.

## Example 6

Example 4 was repeated except that an alloy film of Te-Ge-Cr (Te:Ge:Cr = 59:31:10 atom%) was used as the recording layer 2 to obtain an optical recording medium.

The recording medium was examined by the same method as example 4. Result of C/N was 49 dB.

## Example 7

Example 4 was repeated except that an alloy film of Te-Ge-Cr (Te:Ge:Cr = 43:43:14 atom%) was used as the recording layer 2 to obtain an optical recording medium.

The recording medium was examined by the same method as example 4. Result of C/N was 46 dB.

## Example 8

Example 4 was repeated except that an alloy film of Te-Ge-Cr (Te:Ge:Cr = 46:46:8 atom%) was used as the recording layer 2 to obtain an optical recording medium.

The recording medium was examined by the same method as example 4. Result of C/N was 44 dB.

## Example 9

A transparent dielectric layer having film thickness of 300 Å composed of silicon chromium nitride ($SiN_xCr$) having film thickness of 300 Å was formed on a substrate composed of an amorphous copolymer of ethylene with DMON by means of sputterring method, said amorphous copolymer having an ethylene content of 59 mol% measured by $^{18}$C-NMR analysis, a DMON content of 41 mol%, an intrisic viscosity [η] of 0.42 dl/g measured in decalin at 135°C and a softening point (TMA) of 154°C. Subsequently, an alloy film of Te-Ge-Cr (Te:Ge:Cr = 50:40:10 atom%, film thickness = 350 Å) and a reflection layer of nickel chromium (NiCr) having film thickness of 500 Å were formed on the dielectric layer in order by means of sputterring method. Subsequently, an acrylic ultraviolet-curing resin (tradename of SD17, supplied by Dainippon Ink & Chemicals, Inc.) was coated on the reflection layer by means of spin coat method and the ultraviolet-curing resin was irradiated with ultraviolet beam to obtain a protective layer having film thickness of about 10 µm so that an optical recording medium was obtained.

This optical recording medium thus prepared was examined by the same method as example 4. Result of C/N was 55 dB.

Example 10

An optical recording medium 10 as shown in Fig. 1 was prepared by using a glass plate as a substrate 3, an alloy film of Te-Ge-Zn (Te:Ge:Zn = 30:20:50 atom%, film thickness T = 3,500 Å) as a recording layer 2, and an acrylic ultraviolet-curing resin (trade name SD17, supplied by Dainippon Ink & Chemicals, Inc.) layer as a protective layer 1 having a film thickness of 100 µm.

This optical recording medium thus prepared was irradiated with a laser beam having a recording pulse width of 1.50 µs, a recording power of 3.0-19.5 mW (1.1 mW pitch) and a wavelength of 830 nm, and then irradiated with a laser beam having a reading power of 0.4 mW to read out a difference in reflectance ΔR of each of the changed phase parts before and after irradiation with the recording laser beam. Results obtained are as shown in Fig. 10. From the results thus obtained, it was confirmed that a favorable contrast ratio is obtained by irradiation of the laser beam having a recording power of at least 8.5 mW. Further, the optical recording medium 10 thus obtained was subjected to differential thermal analysis at a heating rate of 10°C/min to obtain results as shown in Fig. 11. From the results thus obtained, it was confirmed that the crystallizing temperature of this optical recording medium is about 326 °C.

Comparative Example 1

Example 1 was repeated except that an alloy film of Te-Ge (Te:Ge = 60:40 atom%) was used as the recording layer 2 to obtain results as shown in Figs. 5 and 6, respectively. When Example 1 was compared with Comparative Example 1 on the basis of the results obtained above, it was understood that in the case of Example 1, by virtue of the addition into the recording layer of Cr. (1) the contrast ratio before and after irradiation of the recording laser beam is sharply improved, and (2) the crystallizing temperature of the recording layer is higher by about 30°C than that of the recording layer of the said Comparative Example 1, thus the optical recording layer of Example 1 has a prolonged duration of life.

Similarly, from the comparison between the results obtained in Example 10 and Comparative Example 1, it was understood that in the case of Example 10, by virtue of the addition into the recording layer of Zn, (1) the contrast ratio before and after irradiation of the laser beam is sharply improved, and (2) the crystallizing temperature of the recording layer is higher by about 100°C than that of the recording layer of Comparative Example 1, thus the optical recording medium of Example 10 has a prolonged duration of life.

Further, from the comparison between the results obtained in Example 2~9 and Comparative Example 1, it was understood that in the case of Example 2~9, by virtue of the addition into the recording layer of Cr, the contrast ratio before and after irradiation of the laser beam (i.e. C/N ) is sharply improved.

## Claims

1. An optical recording medium comprising a substrate and a recording layer formed on the substrate and designed to record given pieces of information by varying optical constants of part of said recording layer by means of imagewise irradiation with an energy beam, wherein the recording layer comprises Te, Ge and Cr, and the proportion of Cr contained in said recording layer is 1 to 30 atom% based on the total amount of atoms constituting the recording layer.

2. An optical recording medium according to claim 1 wherein the proportion of Cr is 3 to 20 atom% based on the total amount of atoms constituting the recording layer.

3. An optical recording medium according to claim 1 wherein the proportions of Te, Ge and Cr atoms contained in the recording layer are represented by the formula $(Te_xGe_{101-x})_{100-y}Cr_y$ wherein x is $30 \leq x \leq 90$ and y is $1 \leq y \leq 30$.

4. An optical recording medium according to claim 3 wherein x is $40 \leq x \leq 80$ and y is $3 \leq y \leq 20$.

5. An optical recording medium comprising a substrate and a recording layer formed on the substrate and designed to record given pieces of information by varying optical constants of parts of said recording layer by means of imagewise irradiation with an energy beam, wherein the recording layer comprises Te, Ge and Zn, and the proportions of Te, Ge and Zn atoms contained in the recording layer are represented by the formula $(Te_xGe_{100-x})_{100-y}Zn_y$ wherein x is $20 \leq x \leq 90$ and y is $20 < y \leq 70$.

6. An optical recording medium according to claim 5 wherein x is $30 \leq x \leq 80$ and y is $25 \leq y \leq 60$.

# FIG.1

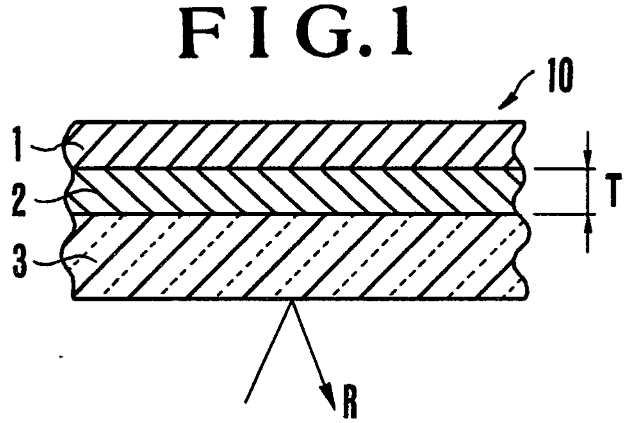


# FIG.2

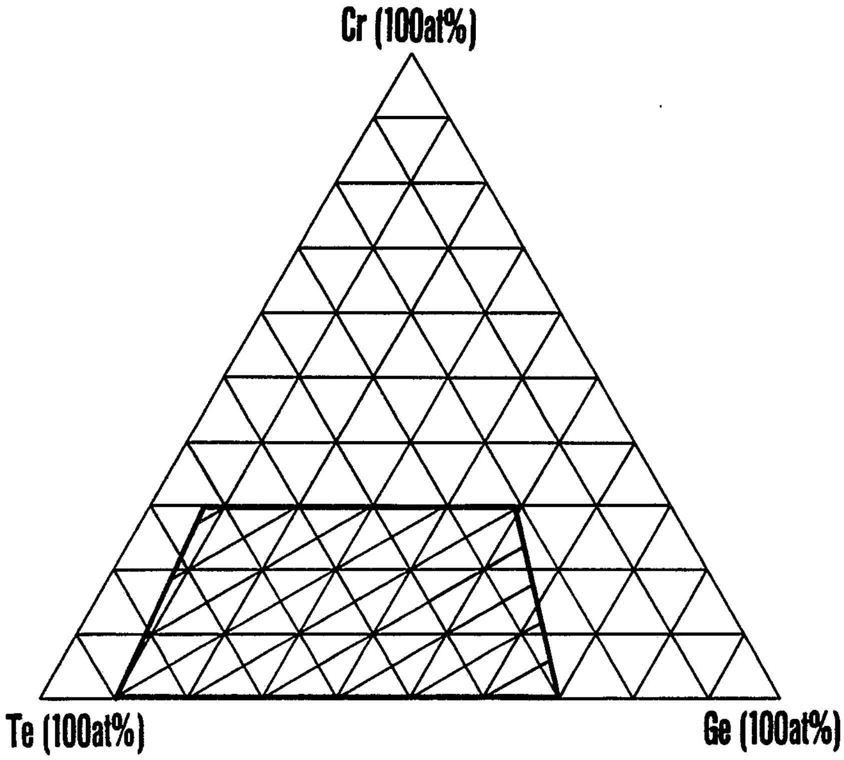

FIG.3

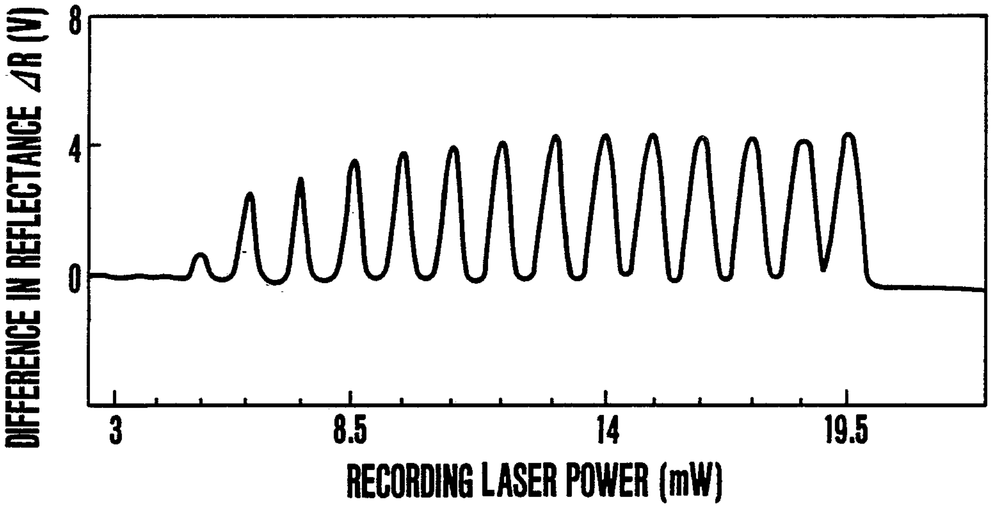
DIFFERENCE IN REFLECTANCE ⊿R (V)
8
4
0
3
8.5
14
19.5
RECORDING LASER POWER (mW)

FIG.4

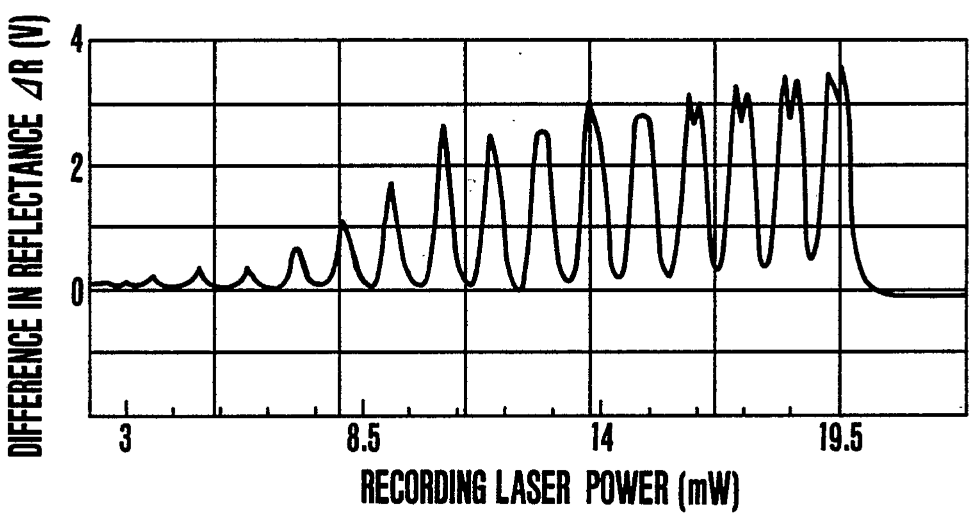
DIFFERENCE IN REFLECTANCE ⊿R (V)
4
2
0
3
8.5
14
19.5
RECORDING LASER POWER (mW)

# FIG.5

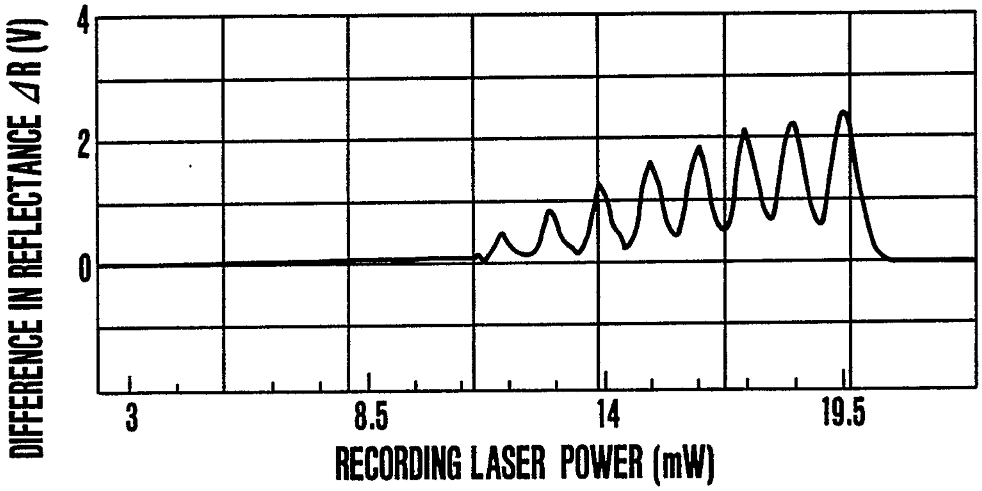
DIFFERENCE IN REFLECTANCE ⊿R (V)
4
2
0
3
8.5
14
19.5
RECORDING LASER POWER (mW)

# FIG.6

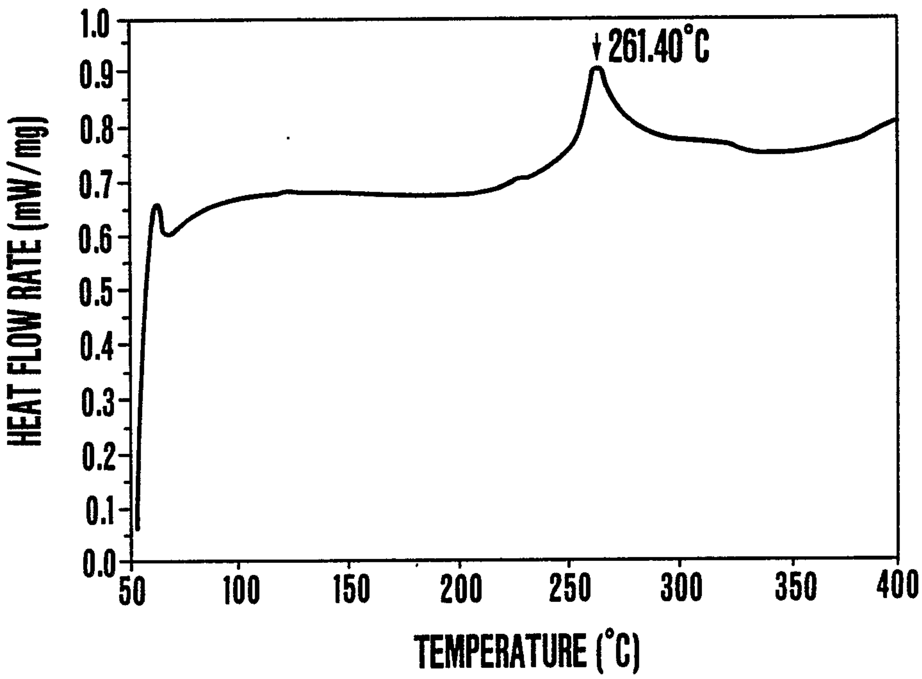
↓261.40°C
HEAT FLOW RATE (mW/mg)
1.0
0.9
0.8
0.7
0.6
0.5
0.4
0.3
0.2
0.1
0.0
50
100
150
200
250
300
350
400
TEMPERATURE (°C)

FIG.7

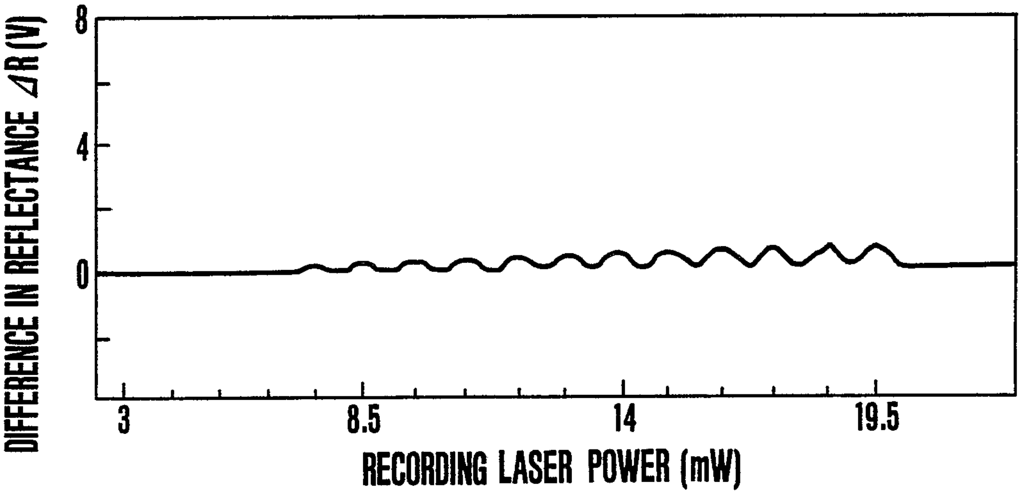
DIFFERENCE IN REFLECTANCE ΔR (V)
8
4
0
3
8.5
14
19.5
RECORDING LASER POWER (mW)

FIG.8

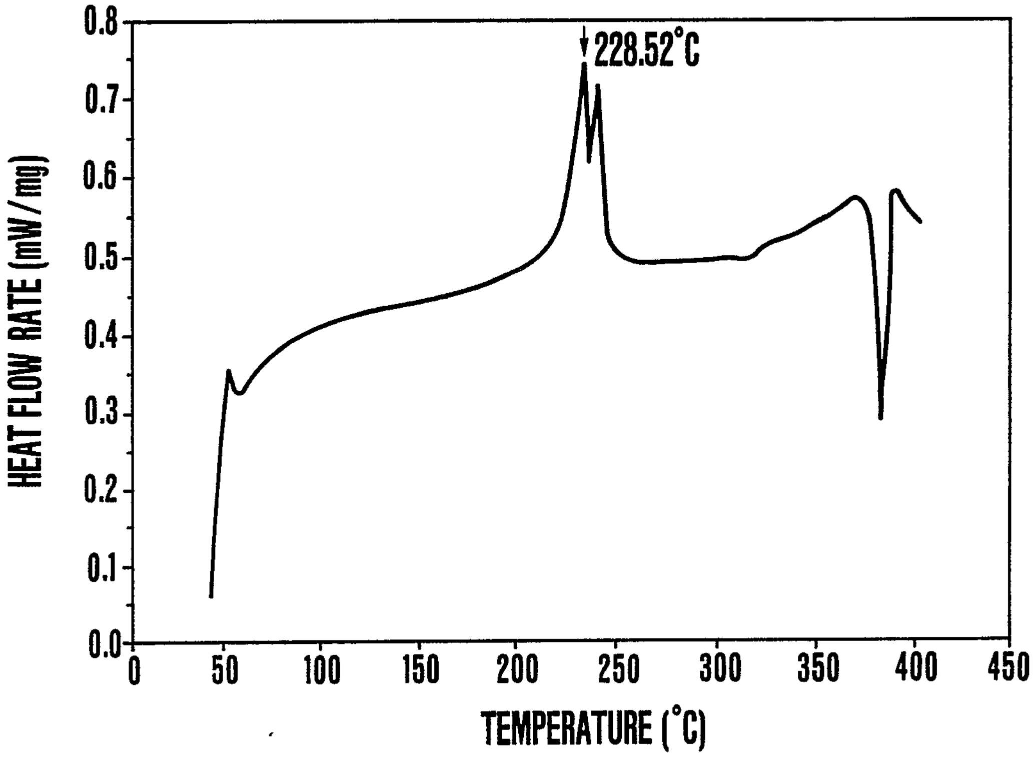
HEAT FLOW RATE (mW/mg)
0.8
0.7
0.6
0.5
0.4
0.3
0.2
0.1
0.0
228.52°C
0
50
100
150
200
250
300
350
400
450
TEMPERATURE (°C)

# FIG.9

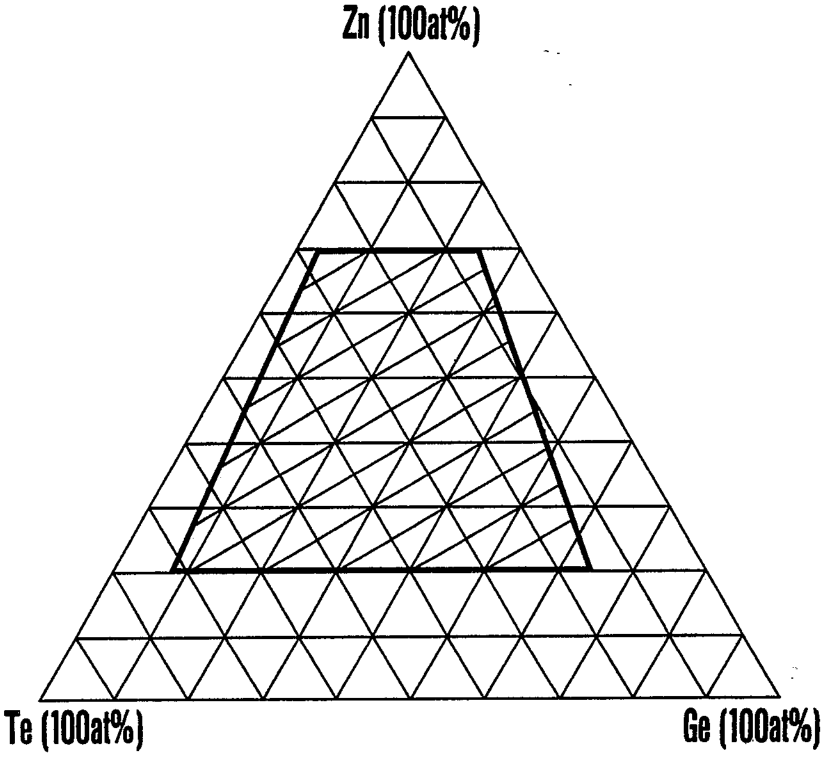

# F I G.10

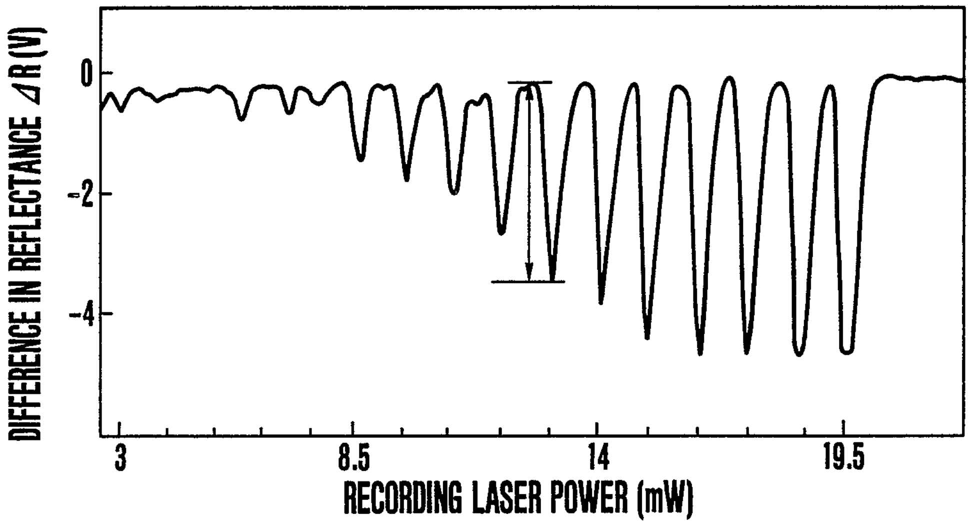
DIFFERENCE IN REFLECTANCE ⊿R (V)
0
-2
-4
3
8.5
14
19.5
RECORDING LASER POWER (mW)

# F I G.11

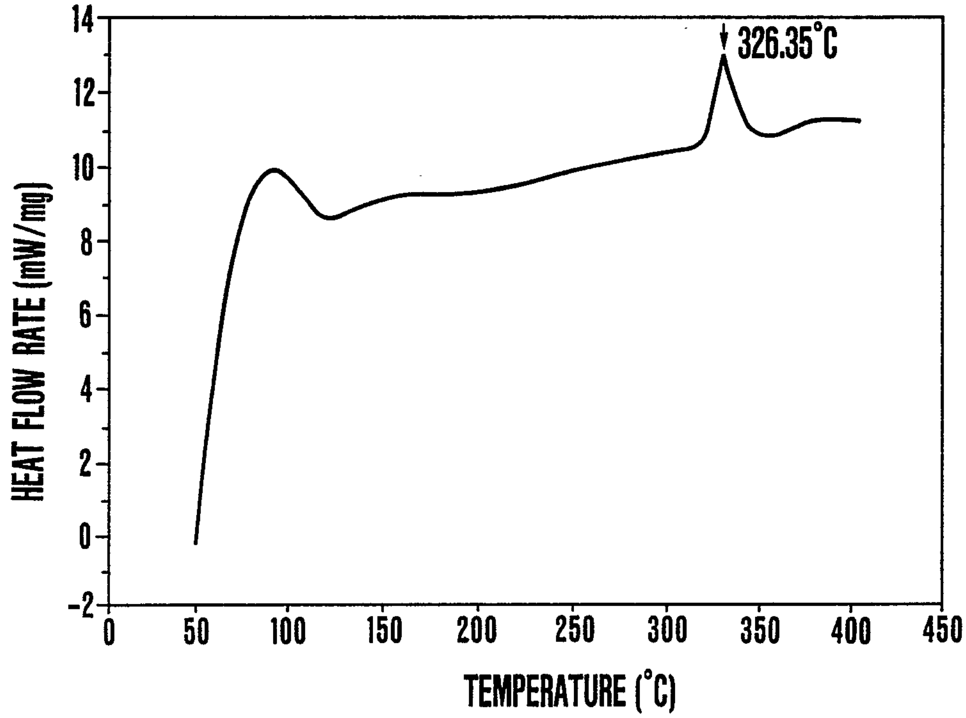
326.35°C
HEAT FLOW RATE (mW/mg)
14
12
10
8
6
4
2
0
-2
0
50
100
150
200
250
300
350
400
450
TEMPERATURE (°C)